# EUROPEAN PATENT APPLICATION

(11) **EP 4 318 793 A1**
(43) Date of publication of application: **07.02.2024**
(21) Application number: 23749922.3
(22) Date of filing: 20.01.2023
(51) Int. Cl.: H01M 50/593, H01M 50/152, H01M 50/167, H01M 50/186, H01M 50/538, H01M 50/107, H01M 50/213, F16J 15/02, H01M 10/04

(54) **BATTERY, AND BATTERY PACK AND VEHICLE INCLUDING SAME**

(30) Priority: 04.02.2022 KR 20220014958; 19.07.2022 KR 20220088961
(71) Applicant: LG ENERGY SOLUTION, LTD., Seoul 07335 (KR)
(72) Inventor: KANG, Bo-Hyun, Daejeon 34122 (KR); KIM, Do-Gyun, Daejeon 34122 (KR); MIN, Geon-Woo, Daejeon 34122 (KR); JO, Min-Ki, Daejeon 34122 (KR); CHOI, Su-Ji, Daejeon 34122 (KR); HWANGBO, Kwang-Su, Daejeon 34122 (KR)
(74) Representative: Goddar, Heinz J.
(86) International application number: PCT/KR2023/001075
(87) International publication number: WO 2023/149689

(57) **Abstract**

Disclosed is a battery, which includes an electrode assembly having a first uncoated portion and a second uncoated portion; a housing having an open portion formed at one side and configured to accommodate the electrode assembly through the open portion; a first current collector coupled with the first uncoated portion and located inside the housing; a cap configured to cover the open portion; and a spacer assembly having a spacer portion interposed between the first current collector and the cap and configured to prevent movement of the electrode assembly, a gasket portion interposed between the housing and the cap and configured to seal the gap between the cap and the housing,and a connection portion configured to connect the spacer portion and the gasket portion and having a bending portion configured to switch an extension direction thereof between the spacer portion and the gasket portion.

## Description

### TECHNICAL FIELD

The present application claims priority to Korean Patent Application No. 10-2022-0014958 filed on February 4, 2022 and No. 10-2022-0088961 filed on July 19, 2022 in the Republic of Korea, the disclosures of which are incorporated herein by reference.

The present disclosure relates to a battery, and a battery pack and a vehicle including the same. More particularly, the present disclosure relates to a battery having a structure capable of minimizing movement of an internal electrode assembly, and a battery pack and a vehicle including the same.

### BACKGROUND ART

In a battery, a jelly-roll having a shape in which a positive electrode tab and a negative electrode tab are extended upwards and downwards along the height direction may be applied to a housing in order to maximize current collection efficiency. In a battery to which a jelly-roll having the above structure is applied, a current collector may be used as a medium for connecting the positive electrode tab and the negative electrode tab to the terminal and the housing, respectively.

In this case, for example, the positive electrode current collector may be coupled with the positive electrode tab while covering one surface of the jelly-roll and, and the negative electrode current collector may be coupled with the negative electrode tab while covering the other surface of the jelly-roll. In addition, the positive electrode current collector may be electrically connected to the terminal, and the negative electrode current collector may be electrically connected to the housing.

In the battery having the structure as described above, a relatively large empty space may be formed between the negative electrode current collector and the cap. In addition, an empty space may also be formed between the bottom surface of the housing located opposite to the cap and the positive electrode current collector.

These empty spaces may cause the j elly-roll to move inside the housing, especially in the upper and lower direction, namely along the height direction of the battery. When the j elly-roll moves up and down like this, damage may occur to the joint between the current collector and the electrode tab, and in addition, damage may occur to the joint between the current collector and the housing and the joint between the current collector and the terminal.

Therefore, it is necessary to reduce the movement space of the j elly-roll as much as possible. In addition, if additional parts applied to reduce the movement space of the jelly-roll are used, the complexity of the process and the manufacturing cost may increase, so there is a need to solve these problems by using parts that have already been applied in the past.

### DISCLOSURE

### Technical Problem

The present disclosure is designed to solve the problems of the related art, and therefore the present disclosure is directed to preventing damage to an electrical coupling portion caused by the movement of a j elly-roll inside a housing.

In addition, the present disclosure is directed to preventing the complexity of the manufacturing process and increase in manufacturing cost caused by the application of additional parts by preventing the movement of the jelly-roll by utilizing parts that have already been applied in the past in battery manufacturing.

In another aspect, the present disclosure may also be directed to preventing abnormal deformation of a spacer assembly due to force applied to the spacer assembly during the manufacturing process of the battery.

The technical objects to be solved by the present disclosure are not limited to the above, and other objects not mentioned herein will be clearly understood by those skilled in the art from the following disclosure.

### Technical Solution

In one aspect of the present disclosure, there is provided a battery, comprising: an electrode assembly having a first uncoated portion and a second uncoated portion; a housing having an open portion formed at one side and configured to accommodate the electrode assembly through the open portion; a first current collector coupled with the first uncoated portion and located inside the housing; a cap configured to cover the open portion; and a spacer assembly having a spacer portion interposed between the first current collector and the cap and configured to prevent movement of the electrode assembly, a gasket portion interposed between the housing and the cap and configured to seal the gap between the cap and the housing, and a connection portion configured to connect the spacer portion and the gasket portion and having a bending portion configured to switch an extension direction thereof between the spacer portion and the gasket portion.

The connection portion may include a plurality of bridges arranged to be spaced apart from each other along a circumferential direction of the electrode assembly.

The bending portion may have a convex shape in a direction opposite to the direction toward the first current collector.

The connection portion may have a notch portion configured to partially reduce a cross-sectional area of the connection portion.

The notch portion may be formed to a predetermined depth on a surface facing the first current collector.

The notch portion may be located between the bending portion and the spacer portion.

The spacer portion may have a height corresponding to the distance between the first current collector and the cap.

The spacer portion may be located in the center on one surface of the electrode assembly.

The spacer portion may have a spacer hole formed at a position corresponding to a winding center hole of the electrode assembly.

The spacer assembly may have an ejection preventing portion configured to intersect the spacer hole.

The housing may include a beading portion formed by press-fitting an outer circumference; and a crimping portion configured to extend and bend so that an end of the crimping portion defining the open portion under the beading portion surrounds an edge of the cap.

The gasket portion may be bent along the crimping portion to surround the edge of the cap.

The plurality of bridges may be configured not to contact the first current collector.

The plurality of bridges may be configured not to contact the cap.

The first current collector may include a support portion located in the center on one surface of the electrode assembly; an uncoated portion coupling portion configured to extend from the support portion and coupled to the first uncoated portion; and a housing contact portion configured to extend from the support portion or extend from an end of the uncoated portion coupling portion and interposed between the housing and the gasket portion.

The housing may include a beading portion formed by press-fitting a part of a sidewall thereof toward the inside; and a crimping portion configured to extend and bend so that an end of the crimping portion defining the open portion under the beading portion surrounds an edge of the cap, and
the housing contact portion may be in contact with one surface of the beading portion facing the cap.

The cap may include a venting portion having a thinner thickness compared to the surrounding region, and
the spacer portion may be located more inward than the venting portion not to cover the venting portion.

The connection portion may be located not to overlap with the housing contact portion along a height direction of the battery.

In another aspect of the present disclosure, there is also provided a battery pack, which comprises the battery an embodiment of the present disclosure.

In another aspect of the present disclosure, there is also provided a vehicle, which comprises the battery pack an embodiment of the present disclosure.

### Advantageous Effects

According to an embodiment of the present disclosure, the movement of the jelly-roll inside the housing is minimized, thereby preventing damage to an electrical coupling portion.

According to another embodiment of the present disclosure, the complexity of the manufacturing process and the increase in manufacturing cost may be prevented by utilizing parts that have already been applied in the past instead of additionally applying parts for preventing movement of the j elly-roll.

According to still another embodiment of the present disclosure, abnormal deformation of the spacer assembly due to force applied to the spacer assembly during the manufacturing process of the battery may be prevented. Meanwhile, since abnormal deformation of the spacer assembly is prevented, it is possible to effectively prevent product defects from occurring by the force applied to the current collector and/or the electrode assembly due to deformation of the spacer assembly.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing the appearance of a cylindrical battery according to an embodiment of the present disclosure.
FIG. 2 is a cross-sectional view showing the internal structure of the cylindrical battery according to an embodiment of the present disclosure.
FIG. 3 is a perspective view showing an exemplary form of a first current collector applied to the present disclosure.
FIG. 4 is a partial cross-sectional view showing a region to which a spacer assembly of the present disclosure is applied.
FIGS. 5 and 6 are diagrams showing exemplary forms of the spacer assembly according to the present disclosure.
FIG. 7 is a partial cross-sectional view showing the spacer assembly of FIGS. 5 and 6.
FIG. 8 is a photograph of the internal structure of a cylindrical battery to which the spacer according to the present disclosure is applied, showing that even if force is applied to the spacer assembly according to a crimping process, abnormal deformation does not occur in the spacer and thus abnormal deformation does not occur in the current collector.
FIG. 9 is a diagram showing a spacer that does not have a stress relieving structure, unlike the spacer of the present disclosure.
FIG. 10 is a photograph of the internal structure of a cylindrical battery to which the spacer without a stress relieving structure is applied, showing that the spacer causes abnormal deformation by the force transmitted according to the crimping process, and as a result, the current collector also causes abnormal deformation.
FIG. 11 is a plan view showing a bottom surface of the cylindrical battery of the present disclosure.
FIG. 12 is a partial cross-sectional view showing a region to which an insulator of the present disclosure is applied.
FIG. 13 is a diagram showing an electrode assembly in which segments of the present disclosure are formed.
FIG. 14 is a top plan view showing a state in which a plurality of cylindrical batteries according to an embodiment of the present disclosure are connected in series and in parallel using a bus bar.
FIG. 15 is a schematic diagram showing a battery pack according to an embodiment of the present disclosure.
FIG. 16 is a conceptual diagram showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help understanding of the present disclosure, the accompanying drawings are not drawn to scale, and the dimensions of some components may be exaggerated. In addition, the same reference numerals may be assigned to the same elements in different embodiments.

When it is explained that two objects are 'identical', this means that these objects are `substantially identical'. Accordingly, the substantially identical objects may include deviations considered low in the art, for example, deviations within 5%. Also, when it is explained that certain parameters are uniform in a region, this may mean that the parameters are uniform in terms of an average.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

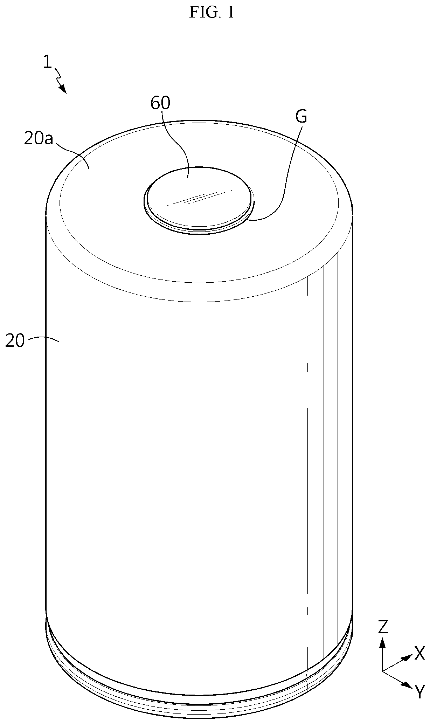

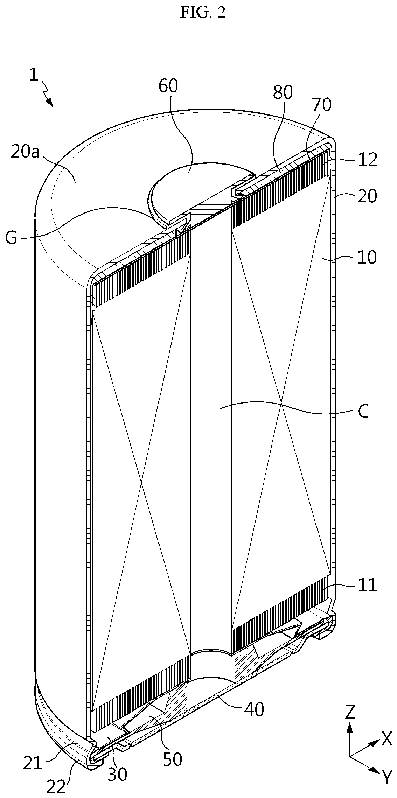

Referring to FIGS. 1 and 2, a battery 1 according to an embodiment of the present disclosure may be, for example, a cylindrical battery. The cylindrical battery 1 includes an electrode assembly 10, a housing 20, a first current collector 30, a cap 40, and a spacer assembly 50. The cylindrical battery 1 may further include a terminal 60. The cylindrical battery 1 may further include an insulating gasket G and/or a second current collector 70 and/or an insulator 80 in addition to the components described above. The present disclosure is not limited by the shape of the battery, and is applicable to batteries of other shapes, such as prismatic batteries.

Referring to FIGS. 2, 4, 12 and 13, the electrode assembly 10 includes a first uncoated portion 11 and a second uncoated portion 12. The electrode assembly 10 includes a first electrode having first polarity, a second electrode having second polarity, and a separator interposed between the first electrode and the second electrode. The first electrode is a negative electrode or a positive electrode, and the second electrode corresponds to an electrode having polarity opposite to that of the first electrode.

The electrode assembly 10 may have, for example, a jelly-roll shape. That is, the electrode assembly 10 may be manufactured by winding a laminate, which is formed by sequentially laminating a first electrode, a separator and a second electrode at least once. The jelly-roll type electrode assembly 10 may have a winding center hole C formed at its center and extending along a height direction (direction parallel to Z-axis). Meanwhile, an additional separator may be provided on the outer circumference of the electrode assembly 10 for insulation from the housing 20.

The first electrode includes a first conductive substrate and a first electrode active material layer coated on one surface or both surfaces of the first conductive substrate. At one end of the first conductive substrate in the width direction (direction parallel to Z-axis), a first electrode uncoated portion not coated with the first electrode active material is provided. The first electrode uncoated portion has a shape extending from one end to the other end along the longitudinal direction of the first electrode when the first electrode is in an unfolded state. The first electrode uncoated portion 11 may function as a first electrode tab. The first uncoated portion 11 is provided on one surface of the electrode assembly 10. More specifically, the first uncoated portion 11 is provided at the lower portion of the electrode assembly 10 accommodated in the housing 20 in the height direction (direction parallel to Z-axis).

The second electrode includes a second conductive substrate and a second electrode active material layer coated on one surface or both surfaces of the second conductive substrate. At the other end of the second conductive substrate in the width direction (direction parallel to Z-axis), an uncoated portion not coated with the second electrode active material is provided. The second electrode uncoated portion has a shape extending from one end to the other end along the longitudinal direction of the second electrode when the second electrode is in an unfolded state. The second electrode uncoated portion 12 may function as a second electrode tab. The second uncoated portion 12 is provided on the other surface of the electrode assembly 10. More specifically, the second uncoated portion 12 is provided at the upper portion of the electrode assembly 10 accommodated in the housing 20 in the height direction (direction parallel to Z-axis).

That is, the first uncoated portion 11 and the second uncoated portion 12 protrusively extend in opposite directions along the height direction (direction parallel to Z-axis) of the electrode assembly 10, namely along the height direction of the cylindrical battery 1, and are exposed to the outside of the separator.

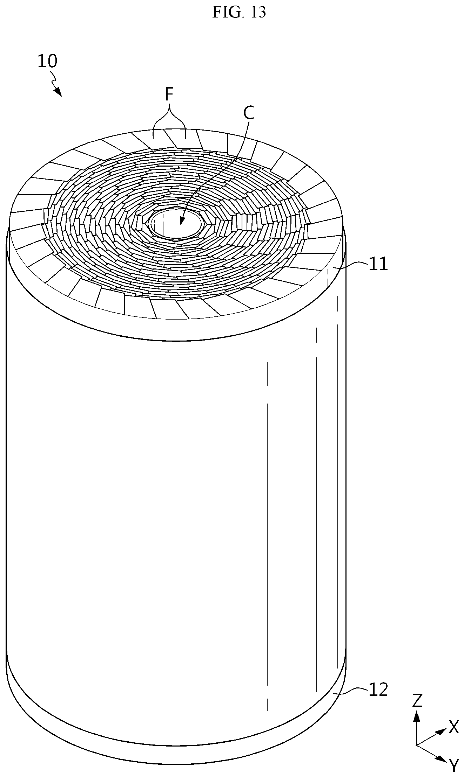

Meanwhile, referring to FIG. 13, at least a part of the first uncoated portion 11 and/or the second uncoated portion 12 may include a plurality of segments F divided along the winding direction of the electrode assembly 10. In this case, the plurality of segments may be bent along the radial direction of the electrode assembly 10. The plurality of bent segments may be overlapped in several layers. In this case, the first current collector 30 and/or the second current collector 70, explained later, may be coupled to a region in which the plurality of segments F are overlapped in several layers. Meanwhile, the electrode assembly 10 may include a welding target area, which is a region in which the number of overlapping layers of the segments F of the first uncoated portion 11 is maintained constant along the radial direction of the electrode assembly 10. In this region, since the number of overlapping layers is maintained approximately at the maximum, it may be advantageous that welding of the first current collector 30 and the first uncoated portion 11 and/or welding of the second current collector 70 and the second uncoated portion 12, explained later, is performed within this region. For example, in the case of applying laser welding, when the power of the laser is increased to improve the welding quality, this is to prevent the laser beam from penetrating the first uncoated portion 11 and/or the second uncoated portion 12 and damaging the electrode assembly 10. In addition, this is to effectively prevent foreign substances such as welding spatter from being introduced into the electrode assembly 10.

In the present disclosure, a positive electrode active material coated on the positive electrode current collector and a negative electrode active material coated on the negative electrode current collector may employ any active material known in the art without limitation.

In one example, the positive electrode active material may include an alkali metal compound expressed by a general formula A[AₓM_{y}]O_{2+z} (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; and the stoichiometric coefficients of x, y and z and components included in M are selected so that the compound maintains electrical neutrality).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from the Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally including F; 0 < a ≤2, 0 ≤ x ≤ 1, 0 ≤ y < 1, 0 ≤ z < 1; the stoichiometric coefficients of a, x, y and z and components included in M¹, M², and M³ are selected so that the compound maintains electrical neutrality), or Li₃M2(PO₄)₃ (M includes at least one element selected from Ti, Si, Mn, Fe, Co, V, Cr, Mo, Ni, Al, Mg and Al).

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

The inorganic particles may be made of an inorganic material having a dielectric constant of 5 or more. The inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃, PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure like A⁺B⁻. Here, A⁺ includes an alkali metal cation such as Li⁺, Na⁺, or K⁺, or a combination thereof, and B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

Referring to FIGS. 1, 2, 4 and 12, the housing 20 accommodates the electrode assembly 10 through an open portion formed at a bottom end thereof. The housing 20 is a substantially cylindrical container having an open portion formed at its bottom end and a closed portion formed at its top end. The housing 20 may be made of a conductive material such as metal. The material of the housing 20 may be, for example, aluminum. The side surface (outer circumference) and the upper surface of the housing 20 may be integrally formed. The upper surface (surface parallel to the X-Y plane) of the housing 20 may have a substantially flat shape. The housing 20 accommodates an electrolyte together with the electrode assembly 10 through the open portion formed at the bottom end.

The housing 20 is electrically connected to the electrode assembly 10. The housing 20 is connected to the first uncoated portion 11 of the electrode assembly 10. Accordingly, the housing 20 has electrically the same polarity as the first uncoated portion 11.

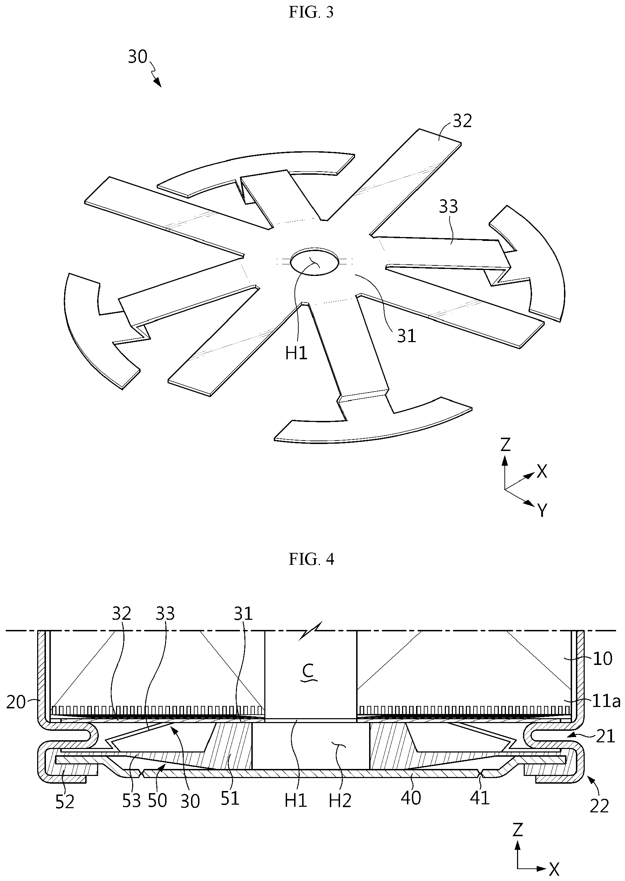

Referring to FIGS. 2 and 4, the housing 20 may include a beading portion 21 and a crimping portion 22 formed at a bottom end thereof. The beading portion 21 is provided at a lower side of the electrode assembly 10 accommodated inside the housing 20. The beading portion 21 is formed by press-fitting the outer circumference of the housing 20. The beading portion 21 prevents the electrode assembly 10, which may have a size approximately corresponding to the width of the housing 20, from coming out through the open portion formed at the bottom end of the housing 20 by partially reducing the inner diameter of the housing 20. The beading portion 21 may also function as a support portion on which the cap 40 is seated.

The crimping portion 22 is formed below the beading portion 21. The crimping portion 22 has a shape extending and bending so that the end defining the open portion of the housing 20 surrounds the periphery of the edge of the cap 40 in a state where the periphery of the edge of the spacer assembly 50 is interposed therebetween.

Referring to FIGS. 2 to 4, the first current collector 30 is coupled to the first uncoated portion 11 of the electrode assembly 10 and is located inside the housing 20. The first current collector 30 covers at least a part of one surface of the bottom end of the electrode assembly 10. The coupled body including the electrode assembly 10 and the first current collector 30 may be inserted into the housing 20 through the open portion formed at the bottom end of the housing 20. The first current collector 30 is electrically connected to the housing 20. That is, the first current collector 30 may function as a medium for electrical connection between the electrode assembly 10 and the housing 20.

Referring to FIG. 3, the first current collector 30 may include, for example, a support portion 31, an uncoated portion coupling portion 32, and a housing contact portion 33. The support portion 31 is located approximately at the center on one surface formed at the bottom end of the electrode assembly 10. A first current collector hole H1 may be provided in the support portion 31. In this case, the first current collector hole H1 may be formed at a position corresponding to the winding center hole C of the electrode assembly 10. The first current collector hole H1 may function as a passage for laser irradiation or insertion of a welding rod for bonding between the terminal 60 and the second current collector 70, explained later. In addition, the first current collector hole H1 may also function as a passage through which an electrolyte may be smoothly impregnated into the electrode assembly 10 when the electrolyte is injected.

The uncoated portion coupling portion 32 extends from the support portion 31 and is coupled with the first uncoated portion 11. The uncoated portion coupling portion 32 may be provided in plural, for example. In this case, the plurality of uncoated portion coupling portions 32 may have a shape radially extending from the support portion 31. The housing contact portion 33 may extend from the support portion 31 as shown in FIG. 3 or may extend from an end of the uncoated portion coupling portion 32 unlike that shown in FIG. 3. An end of the housing contact portion 33 may be interposed between the housing 20 and the gasket portion 52 of the spacer assembly 50, explained later, and contact the housing 20, whereby the housing 20 and the first current collector 30 may be electrically connected. The end of the housing contact portion 33 may contact one surface of the beading portion 21 facing the cap 40, for example.

The housing contact portion 33 may be provided in plural, for example. In this case, as shown in FIG. 3, the plurality of housing contact portions 33 may have a shape extending radially from the support portion 31, and at least one housing contact portion 33 may be located between the uncoated portion coupling portions 32 adjacent to each other. Alternatively, unlike that shown in FIG. 3, the plurality of housing contact portions 33 may have a shape extending from the end of the plurality of uncoated portion coupling portions 32, respectively.

Referring to FIGS. 2, 4 and 11, the cap 40 covers the open portion formed in the housing 20. The cap 40 may be made of, for example, a metal material to secure rigidity. The cap 40 forms the lower surface of the cylindrical battery 1. In the cylindrical battery 1 of the present disclosure, the cap 40 may not have polarity even when it is made of a metal material having conductivity. Having no polarity may mean that the cap 40 is electrically insulated from the housing 20 and the terminal 60. Therefore, the cap 40 does not function as a positive electrode terminal or a negative electrode terminal. Therefore, the cap 40 does not need to be electrically connected to the electrode assembly 10 and the housing 20, and its material does not necessarily have to be a conductive metal.

When the housing 20 of the present disclosure includes the beading portion 21, the cap 40 may be seated on the beading portion 21 formed in the housing 20. In addition, when the housing 20 of the present disclosure includes the crimping portion 22, the cap 40 is fixed by the crimping portion 22. Between the cap 40 and the crimping portion 22 of the housing 20, the periphery of the edge of the spacer assembly 50 is interposed to ensure airtightness of the housing 20.

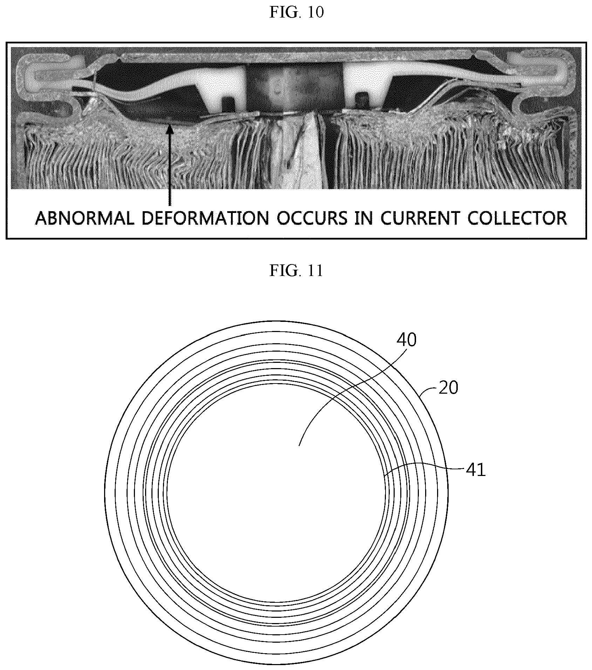

Referring to FIGS. 4 and 11, the cap 40 may further include a venting portion 41 to prevent internal pressure from increasing beyond a preset value due to gas generated inside the housing 20. The venting portion 41 corresponds to a region of the cap 40 having a smaller thickness than the surrounding region. The venting portion 41 is structurally weak compared to the surrounding region. Therefore, when an abnormality occurs in the cylindrical battery 1 so that the internal pressure of the housing 20 increases to a certain level or more, the venting portion 41 may be ruptured to discharge the gas generated inside the housing 20. The venting portion 41 may be formed by partially reducing the thickness of the housing 20 by notching on any one surface or both surfaces of the cap 40, for example.

As shown in FIG. 4, the bottom end of the cap 40 is preferably located higher than the bottom end of the housing 20. In this case, even if the bottom end of the housing 20 touches the ground or the bottom surface of the housing for module or pack configuration, the cap 40 does not touch the ground or the bottom surface of the housing. Therefore, it is possible to prevent a phenomenon that the pressure required for rupturing the venting portion 41 differs from a design value due to the weight of the cylindrical battery 1, and thus the smooth rupture of the venting portion 41 may be secured.

Meanwhile, when the venting portion 41 has a closed loop shape as shown in FIGS. 4 and 11, it is more advantageous that the distance from the center of the cap 40 to the venting portion 41 is longer in terms of ease of rupture. This is because, when the same venting pressure is applied, as the distance from the center of the cap 40 to the venting portion 41 increases, the force acting on the venting portion 41 increases to facilitate rupture. In addition, in terms of the smoothness of venting gas discharge, it is more advantageous that the distance from the center of the cap 40 to the venting portion 41 is longer. From this point of view, it may be advantageous that the venting portion 41 is formed along the periphery of the edge of the substantially flat area protruding downward (direction oriented downward based on FIG. 4) from the periphery of the edge of the cap 40.

FIG. 11 of the present disclosure illustrates a case in which the venting portion 41 is continuously formed while drawing in an approximate circle, but the present disclosure is not limited thereto. The venting portion 41 may be discontinuously formed on the cap 40 while forming a substantially circular shape, or may be formed in a substantially straight line shape or other shapes.

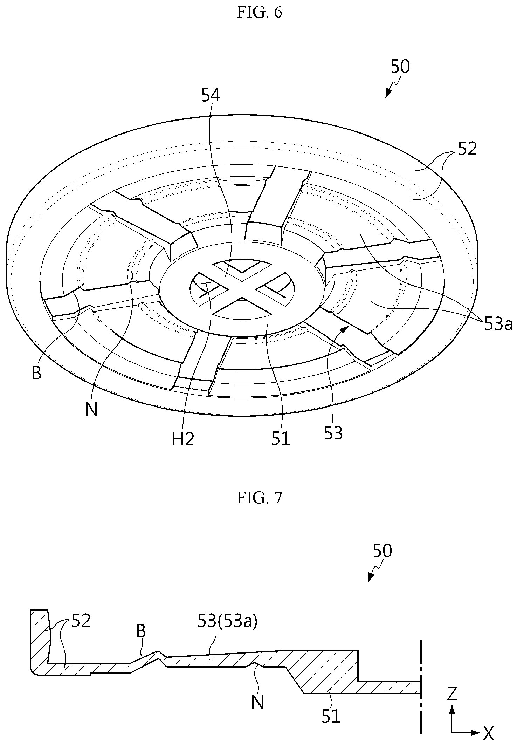

Referring to FIGS. 2 and 4 to 7, the spacer assembly 50 is configured to prevent movement of the electrode assembly 10 and to enhance the sealing force of the housing 20. That is, the spacer assembly 50 is disposed between the cap 40 and the electrode assembly 10 to fix the electrode assembly 10 and seal the housing 20. The spacer assembly 50 may include a central portion for supporting the bottom of the first current collector 30 and a peripheral portion contacting the housing 20. In this case, an upper surface of the central portion may be located higher than an upper surface of the peripheral portion. The upper surface of the central portion may contact the lower surface of the first current collector 30, and the lower surface of the central portion may contact the inner surface of the cap 40. The central portion may have a spacer hole H2 formed at a position corresponding to the winding center hole C of the electrode assembly 10. The peripheral portion may extend toward the inner surface of the housing 20. The spacer assembly 50 may further include a flange extending downward from an outer edge of the peripheral portion. In this case, the flange may be bent together with the housing 20 to cover the edge of the cap 40 when crimping the housing 20.

In another aspect, the spacer assembly 50 may include, for example, a spacer portion 51, a gasket portion 52, and a connection portion 53. The spacer assembly 50 may further include an ejection preventing portion 54 in addition to the components described above. The spacer portion 51 may be interposed between the first current collector 30 and the cap 40 to prevent movement of the electrode assembly 10. The spacer portion 51 may have a height corresponding to a distance between the first current collector 30 and the cap 40. In this case, the spacer portion 51 may effectively prevent the electrode assembly 10 from moving inside the housing 20 due to the gap formed between the first current collector 30 and the cap 40. Accordingly, the spacer portion 51 may prevent damage to the coupling portion between the electrode assembly 10 and the first current collector 30 and/or the coupling portion between the first current collector 30 and the housing 20.

The spacer portion 51 may be located approximately at the center on one surface of the bottom end of the electrode assembly 10. The spacer portion 51 may include a spacer hole H2 formed at a position corresponding to the winding center hole C of the electrode assembly 10. The spacer hole H2, like the first current collector hole H1 described above, may function as a passage for inserting a welding rod or a passage for laser irradiation. The spacer hole H2, like the first current collector hole H1 described above, may also function as a passage through which electrolyte may be smoothly impregnated into the electrode assembly 10 when the electrolyte is injected.

Meanwhile, the spacer portion 51 may cover the support portion 31 of the first current collector 30 so that the support portion 31 is not exposed to the outside of the spacer portion 51. That is, the outer diameter of the top end of the spacer portion 51 may be substantially equal to or larger than the outer diameter of the support portion 31. In this case, the spacer portion 51 may effectively press the first current collector 30.

In another aspect, the spacer portion 51 may be configured to cover at least a part of the welding portion formed by welding the uncoated portion coupling portion 32 of the first current collector 30 and the first uncoated portion 11. That is, the radius of the top end of the spacer portion 51 may be greater than the distance from the welding portion closest to the core of the electrode assembly 10 to the core of the electrode assembly 10. In this case, the spacer portion 51 may effectively prevent a phenomenon that the welding portion of the first current collector 30 and the first uncoated portion 11 is damaged during a crimping process or a sizing process, for example.

In another aspect, the spacer portion 51 may be located more inward toward the core than the venting portion 41 so as not to cover the venting portion 41 formed in the cap 40. That is, the radius measured at the top end of the spacer portion 51 may be smaller than the distance from the center of the cap 40 to the venting portion 41. This is to prevent the rupture pressure of the venting portion 41 from being different from the design value because the venting portion 41 is covered by the spacer assembly 50.

The gasket portion 52 is interposed between the housing 20 and the cap 40. The gasket portion 52 may have a shape extending along the inner circumference of the housing 20. When the housing 20 includes the crimping portion 22, the gasket portion 52 may be bent together along the bent shape of the crimping portion 22 to cover the circumferential region of the edge of the cap 40. In another aspect, the gasket portion 52 may be bent along the crimping portion 22 to fill the gap between the housing contact portion 33 and the cap 40 while covering the edge of the cap 40. As such, the gasket portion 52 may improve the fixing force of the cap 40 and the sealing force of the housing 20.

Meanwhile, in the gasket portion 52, the thickness between the housing contact portion 33 and the cap 40 may be smaller than the thickness between the beading portion 21 and the cap 40. This is because the gasket portion 52 may be compressed more in an area where the housing contact portion 33 is interposed between the housing 20 and the beading portion 21 compared to other areas. Accordingly, in the gasket portion 52, the compression rate between the housing contact portion 33 and the cap 40 may be greater than the compression rate between the beading portion 21 and the cap 40. Alternatively, the gasket portion 52 may be configured such that the compression rate between the housing contact portion 33 and the cap 40 is approximately the same as the compression rate between the beading portion 21 and the cap 40. In this case, as the compression rate of the gasket portion 52 varies for each area, it is possible to prevent a phenomenon that the sealing force is partially lowered.

The connection portion 53 connects the spacer portion 51 and the gasket portion 52 to each other. The connection portion 53 is configured to relieve stress applied to the connection portion 53, when force is applied from the gasket portion 52 toward the spacer portion 51 by an external force. Since the connection portion 53 has a structure capable of relieving stress as described above, it is possible to prevent undesirable effects from being given to the first current collector 30 and the electrode assembly 10 due to abnormal deformation of the spacer assembly 50 caused by an external force.

To realize this function, the connection portion 53 may include a bending portion B whose extension direction is switched between the spacer portion 51 and the gasket portion 52. In the region where the bending portion B is formed, a groove having a predetermined depth may be formed on one surface of the connection portion 53, and a protrusion having a shape corresponding to the groove may be formed on the opposite surface.

The bending portion B may be formed by switching the extension direction of the connection portion 53 twice, for example. However, the number of times of switching the extension direction of the connection portion 53 for forming the bending portion B is not limited. When the connection portion 53 includes the bending portion B, the connection portion 53 may buffer a force acting from the gasket portion 52 toward the spacer portion 51 by an external force. When an external force is applied, shape deformation of the connection portion 53 may naturally occur in the region where the bending portion B is formed in a direction in which the bending angle of the bending portion B increases, and as a result, the external force may be absorbed by the bending portion B without being transferred to the spacer portion 51. That is, the bending portion B may act as a shock absorber like a bellows or a spring, for example. The bending portion B may be provided in plural so as to effectively give a buffering action even if a large external force is applied.

The bending portion B may further protrude in one direction in the process of absorbing an external force when the external force is applied. Accordingly, to prevent contact between the bending portion B and the first current collector 30 and/or the electrode assembly 10, the bending portion B may have a convex shape in a direction opposite to the direction toward the first current collector 30.

The connection portion 53 may further include a notch portion N in addition to the bending portion B described above. The notch portion N may be configured to partially reduce the cross-sectional area of the connection portion 53. The notch portion N may have a groove shape formed on at least one surface of the connection portion 53. The notch portion N may be formed to a predetermined depth on one surface of the connection portion 53 facing the first current collector 30, for example. When the notch portion N is formed on the surface facing the first current collector 30 in this way, shape deformation of the connection portion 53 due to external force occurs in a direction opposite to the direction toward the first current collector 30, and as a result, the risk that the spacer assembly 50 cause interference with the first current collector 30 and/or the electrode assembly 10 is reduced.

The notch portion N may be located between the bending portion B and the spacer portion 51 on the connection portion 53. Like the bending portion B, the notch portion N may also be provided in plural, if necessary.

The connection portion 53 may include, for example, a plurality of bridges 53a spaced apart from each other along the circumferential direction of the electrode assembly 10. In this case, the space formed between the bridges 53a adjacent to each other may function as a passage for smooth electrolyte circulation. In another aspect, the space formed between the bridges 53a adjacent to each other may function as a passage through which an internal gas is smoothly discharged when venting occurs due to an increase in internal pressure. As such, when the connection portion 53 includes a plurality of bridges 53a, the bending portion B for forming the stress relieving structure of the present disclosure as described above may be provided in each of the bridges 53a. In addition, the notch portion N may also be included in each of the plurality of bridges 53a.

The ejection preventing portion 54 may be configured to intersect the spacer hole H2. The ejection preventing portion 54 may be configured to reduce an open area of the spacer hole H2. The ejection preventing portion 54 may have, for example, a substantially cross shape. However, this is only an exemplary form of the ejection preventing portion 54, and the shape of the ejection preventing portion 54 is not limited thereto.

The ejection preventing portion 54 may be provided at a position corresponding to the winding center hole of the electrode assembly 10 and the first current collector hole H1 of the first current collector 30. The ejection preventing portion 54 may prevent the winding center of the electrode assembly 10 from ejecting to the outside of the housing 20 when venting occurs due to an increase in pressure inside the housing 20.

As shown in FIG. 4, the bridge 53a may be configured not to come into contact with a region of the housing contact portion 33 of the first current collector 30 other than the region inserted into the crimping portion 22 and/or the cap 40. For example, the connection portion 53 may be located not to overlap with the housing contact portion 33 along the height direction (direction parallel to Z-axis) of the cylindrical battery 1. For example, in the case where the bridge 53a is provided in plural and the housing contact portion 33 is provided in plural, the plurality of bridges 53a and the plurality of housing contact portions 33 may be arranged to be staggered from each other so as not to overlap with each other along a perpendicular direction (direction parallel to the Z-axis). That is, the housing contact portion 33 may be provided at a position corresponding to the space formed between the bridges 53a adjacent to each other. In this case, even if the shape deformation of the parts occurs due to the external force applied to the housing 20, the possibility of interference between the bridge 53a and the housing contact portion 33 may be significantly lowered, and thus the possibility of problems such as damage to the coupling portion between the parts may be significantly reduced.

In this case, even if the shape deformation of the spacer assembly 50 occurs due to a sizing process of compressing the cylindrical battery 1 along the height direction (direction parallel to the Z axis), a crimping process, or other causes, the interference between the connection portion 53 of the spacer assembly 50 and the housing contact portion 33 of the first current collector 30 may be minimized. In particular, when the bridge 53a is configured not to contact the cap 40, even if the shape of the housing 20 is deformed due to a sizing process or an external impact, the possibility of shape deformation of the bridge 53a may be reduced.

Meanwhile, the components constituting the spacer assembly 50 may be integrally formed. For example, the spacer assembly 50 in which the spacer portion 51, the gasket portion 52 and the connection portion 53 are integrated may be manufactured by injection molding. That is, the cylindrical battery 1 of the present disclosure may obtain both the effect of strengthening the sealing force for the open portion of the housing 20 and the effect of preventing movement of the electrode assembly 10 as a single component configured through modified manufacture of the gasket parts used to seal the open portion of the housing 20. Therefore, according to the present disclosure, the complexity of the manufacturing process and the increase in manufacturing cost caused by the application of additional components may be prevented. Moreover, according to the structure of the spacer assembly 50 of the present disclosure, for example, when an external force such as a crimping process is applied, the force applied approximately along the radial direction to the connection portion 53 of the spacer assembly 50 may be shifted to a direction of rotating the spacer portion 51. Accordingly, the spacer portion 51 may be finely rotated clockwise or counterclockwise on a plane (X-Y plane) (for example, approximately 1 degree may be rotated), whereby stress is not accumulated in the connection portion 53 and thus it is possible to prevent interference with the current collector 30 due to deformation of the connection portion 53.

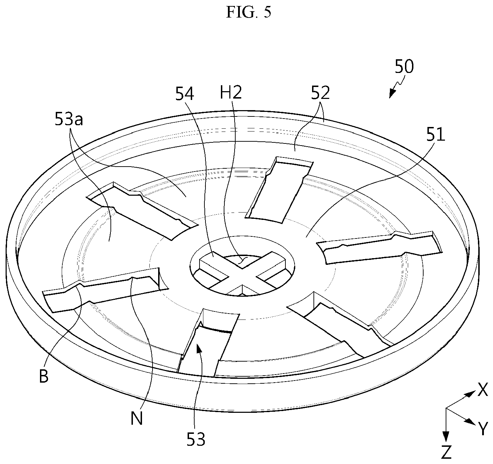

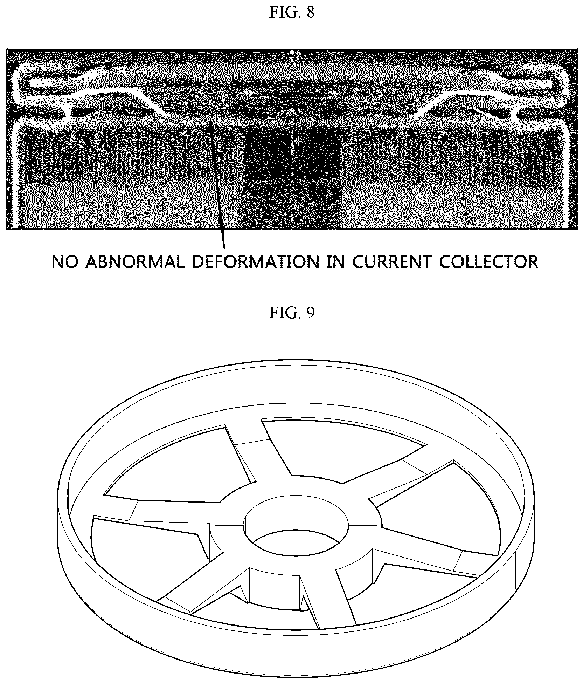

Referring to FIG. 8 along with FIGS. 5 to 7, in the battery 1 to which the spacer assembly 50 of the present disclosure having the stress relieving structure as described above is applied, even if force is applied to the spacer assembly 50 by the crimping process, it may be found that abnormal deformation does not occur in the current collector.

Meanwhile, when an external force is applied through the crimping process to the battery to which the spacer assembly not having the stress relieving structure shown in FIG. 9 is applied, it may be found that the shape deformation of the spacer assembly is greatly generated as shown in FIG. 10. The shape deformation of the spacer assembly applies force to the current collector, which may cause damage to the welding area between the current collector and the electrode assembly and also deform the shape of the electrode assembly.

As a result of checking the degree of deformation of the spacer assembly 50 after the crimping process, as shown in FIG. 9, in the case of the spacer assembly 50 without a stress relieving structure, the connection portion 53 was deformed to move approximately 2.1 mm toward the first current collector 30 and the electrode assembly 10, and the spacer portion 51 was also deformed to move approximately 1.69 mm in the same direction. Meanwhile, in the case of the spacer assembly 50 having the bending portion B, the movement due to the shape deformation of the connection portion 53 was significantly reduced to about 0.2 mm, and the movement of the spacer portion 51 was also reduced to about 1.4 mm. In addition, as shown in FIGS. 5 to 7, in the case of the spacer assembly 50 having both the bending portion B and the notch portion N, the amount of movement due to the shape deformation of the connection portion 53 was approximately 0.2 mm, which showed a similar level of improvement with indicating that the spacer assembly 50 having only the bending portion B, but it was found that the amount of movement of the spacer portion 51 was greatly improved to about 0.1 mm. Seeing these test results, it may be found that, by applying the stress relieving structure of the present disclosure to the spacer assembly 50, it is possible to significantly reduce or completely prevent the risk of problems caused by abnormal deformation of the spacer assembly 50 due to an external force applied by the manufacturing process of the battery or other factors.

Referring to FIGS. 1, 2 and 12, the terminal 60 is electrically connected to the second uncoated portion 12 of the electrode assembly 10. The terminal 60 may pass through, for example, approximately the center of the closed portion formed on the top end of the housing 20. A part of the terminal 60 may be exposed to the upper portion of the housing 20, and the remaining part may be located inside the housing 20. The terminal 60 may be fixed on the inner surface of the closed portion of the housing 20 by, for example, riveting.

As described above, in the present disclosure, since the housing 20 is electrically connected to the first uncoated portion 11 of the electrode assembly 10, the closed portion formed at the top end of the housing 20 may function as the first electrode terminal 20a having first polarity. Meanwhile, since the terminal 60 is electrically connected to the second uncoated portion 12 of the electrode assembly 10, the terminal 60 exposed to the outside of the housing 20 may function as the second electrode terminal.

That is, the cylindrical battery 1 of the present disclosure has a structure in which a pair of electrode terminals 60, 20a are located in the same direction. Therefore, in the case of electrically connecting a plurality of cylindrical batteries 1, it is possible to dispose electrical connecting parts such as bus bars on only one side of the cylindrical batteries 1. In this case, it is possible to simplify the battery pack structure and improve energy density. In addition, since the cylindrical battery 1 has a structure in which one surface of the housing 20 having a substantially flat shape may be used as the first electrode terminal 20a, when bonding electrical connection parts such as bus bars to the first electrode terminal 20a, a sufficient bonding area may be obtained. Accordingly, the cylindrical battery 1 may secure sufficient bonding strength between the electrical connection parts and the first electrode terminal 20a, and resistance at the bonding region may be reduced to a desirable level.

As described above, when the terminal 60 functions as the second electrode terminal, the terminal 60 is electrically insulated from the housing 20 having the first polarity. Electrical isolation between the housing 20 and the terminal 60 may be realized in various ways. For example, insulation may be realized by interposing an insulating gasket G between the terminal 60 and the housing 20. Alternatively, insulation may be realized by forming an insulating coating layer on a part of the terminal 60. Alternatively, the terminal 60 and the housing 20 may be arranged to be spaced apart from each other so as not to contact each other, and the terminal 60 may be structurally firmly fixed. Alternatively, among the methods described above, a plurality of methods may be applied together.

Meanwhile, when the insulating gasket G is applied for electrical insulation and riveting is applied to fix the terminal 60, the insulating gasket G may be deformed together during riveting of the terminal 60 so as to be bent toward the inner surface of the closed portion at the top end of the housing 20. In the case where the insulating gasket G is made of a resin material, the insulating gasket G may be coupled to the housing 20 and the terminal 60 by thermal fusion. In this case, airtightness at the coupling interface between the insulating gasket G and the terminal 60 and the coupling interface between the insulating gasket G and the housing 20 may be enhanced.

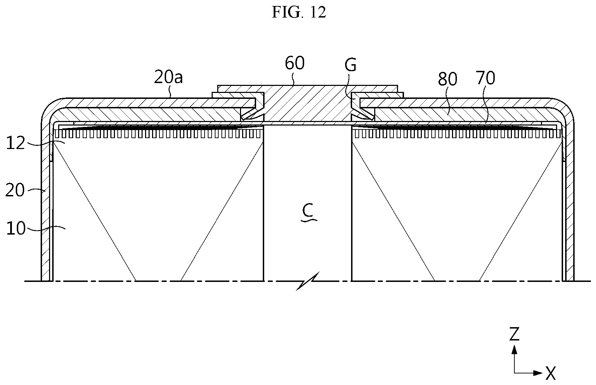

Referring to FIGS. 2 and 12, the second current collector 70 may be coupled to an upper portion of the electrode assembly 10. The second current collector 70 may be made of a conductive metal material and may be coupled with the second uncoated portion 12. The coupling between the second uncoated portion 12 and the second current collector 70 may be performed by, for example, laser welding.

Referring to FIGS. 2 and 12, the insulator 80 may be interposed between the closed portion formed at the top end of the housing 20 and the top end of the electrode assembly 10 or between the closed portion and the second current collector 70. The insulator 80 may be made of, for example, an insulating resin material. The insulator 80 may prevent contact between the electrode assembly 10 and the housing 20 and/or contact between the electrode assembly 10 and the second current collector 70.

In addition to the above, the insulator 80 may also be interposed between the top end of the outer circumference of the electrode assembly 10 and the inner surface of the housing 20. In this case, it is possible to prevent the second uncoated portion 12 of the electrode assembly 10 from contacting the inner surface of the sidewall of the housing 20 and thus causing a short circuit.

The insulator 80 may have a height corresponding to the distance between the closed portion formed at the top end of the housing 20 and the electrode assembly 10 or the distance between the closed portion and the second current collector 70. In this case, it is possible to prevent the electrode assembly 10 from moving inside the housing 20, thereby significantly reducing the risk of damage to the coupling region for electrical connection between parts. When the insulator 80 is applied together with the spacer assembly 50 described above, the effect of preventing movement of the electrode assembly 10 may be maximized.

The insulator 80 may have an opening formed at a position corresponding to the winding center hole C of the electrode assembly 10. Through the opening, the terminal 60 may directly contact the second current collector 70.

The cylindrical battery 1 of the present disclosure described above has a structure in which resistance is minimized by expanding the welding area through the bending surface of the uncoated portion, multiplexing the current path by using the first current collector 30, and minimizing the length of the current path. The AC resistance of the cylindrical battery 1, measured through a resistance meter between the positive electrode and the negative electrode and between the terminal 60 and the flat surface 20a therearound, may be approximately 0.5 milliohm to 4 milliohm, preferably approximately 1 milliohm to 4 milliohm, which is suitable for rapid charging.

Preferably, the cylindrical battery may be, for example, a cylindrical battery whose form factor ratio (defined as a value obtained by dividing the diameter of the cylindrical battery by height, namely a ratio of diameter (Φ) to height (H)) is greater than about 0.4.

Here, the form factor means a value indicating the diameter and height of a cylindrical battery. Preferably, the cylindrical battery may have a diameter of 40 mm to 50 mm and may have a height of 60 mm to 130 mm. The cylindrical battery according to an embodiment of the present disclosure may be, for example, a 46110 battery, a 4875 battery, a 48110 battery, a 4880 battery, or a 4680 battery. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collector to the bending surface region of the uncoated portion, it is necessary to sufficiently increase the number of stacked layers of the uncoated portion in the bending surface region in order to sufficiently secure the welding strength and lower the resistance. This requirement may be achieved by the electrode and the electrode assembly according to the embodiments (modifications) of the present disclosure.

A battery according to an embodiment of the present disclosure may be an approximately cylindrical battery, whose diameter is approximately 46 mm, height is approximately 110 mm, and form factor ratio is 0.418.

A battery according to another embodiment may be an approximately cylindrical battery, whose diameter is about 48 mm, height is about 75 mm, and form factor ratio is 0.640.

A battery according to still another embodiment may be an approximately cylindrical battery, whose diameter is approximately 48 mm, height is approximately 110 mm, and form factor ratio is 0.418.

A battery according to still another embodiment may be an approximately cylindrical battery, whose diameter is approximately 48 mm, height is approximately 80 mm, and form factor ratio is 0.600.

A battery according to still another embodiment may be an approximately cylindrical battery, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

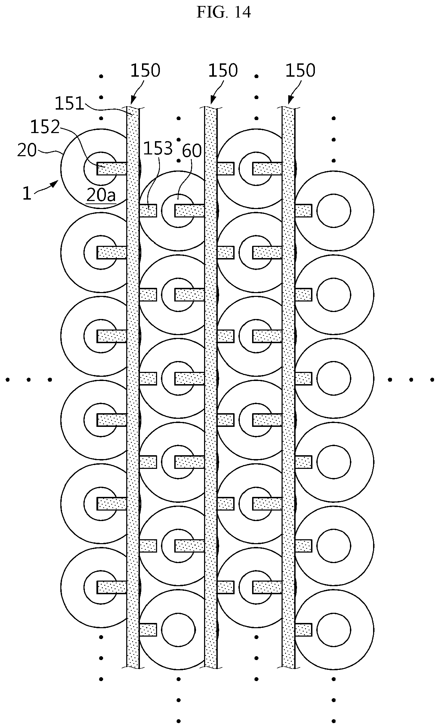

Referring to FIG. 14, a plurality of cylindrical batteries 1 may be connected in series and in parallel at an upper portion of the cylindrical batteries 1 using a bus bar 150. The number of cylindrical batteries 1 may be increased or decreased in consideration of the capacity of the battery pack.

In each cylindrical battery 1, the terminal 60 may have a positive polarity, and the outer surface 20a of the closed portion of the housing 20 may have a negative polarity, or vice versa.

Preferably, the plurality of cylindrical batteries 1 may be arranged in a plurality of columns and rows. Columns are provided in a vertical direction based on the drawing, and rows are provided in a left and right direction based on the drawing. In addition, in order to maximize space efficiency, the cylindrical batteries 1 may be arranged in a closest packing structure. The closest packing structure is formed when an equilateral triangle is formed by connecting the centers of the terminals 60 exposed out of the battery 20 to each other. Preferably, the bus bar 150 may be disposed on the upper portion of the plurality of cylindrical batteries 1, more preferably between adjacent columns. Alternatively, the bus bar 150 may be disposed between adjacent rows.

Preferably, the bus bar 150 connects the cylindrical batteries 1 arranged in the same column in parallel to each other, and connects the cylindrical batteries 1 arranged in two neighboring columns in series with each other.

Preferably, the bus bar 150 may include a body portion 151, a plurality of first bus bar terminals 152 and a plurality of second bus bar terminals 153 for serial and parallel connection.

The body portion 151 may extend between the terminals 60 of neighboring cylindrical batteries 1, namely between the columns of the cylindrical batteries 1. Alternatively, the body portion 151 may extend along the column of the cylindrical batteries 1, and may be regularly bent like a zigzag shape.

The plurality of first bus bar terminals 152 may protrusively extend from one side of the body portion 151 toward the terminal 60 of each cylindrical battery 1 and may be electrically coupled to the terminal 60. The electrical coupling between the first bus bar terminal 152 and the terminal 60 may be achieved by laser welding, ultrasonic welding, or the like. In addition, the plurality of second bus bar terminals 153 may be electrically coupled to the outer surface 20a of each cylindrical battery 1 from the other side of the body portion 151. The electrical coupling between the second bus bar terminal 153 and the outer surface 20a may be performed by laser welding, ultrasonic welding, or the like.

Preferably, the body portion 151, the plurality of first bus bar terminals 152 and the plurality of second bus bar terminals 153 may be made of one conductive metal plate. The metal plate may be, for example, an aluminum plate or a copper plate, but the present disclosure is not limited thereto. In a modified example, the body portion 151, the plurality of first bus bar terminals 152 and the second bus bar terminals 153 may be manufactured as separate pieces and then coupled to each other by welding or the like.

In the cylindrical battery 1 according to the present disclosure, since the terminal 60 having a positive polarity and the outer surface 20a of the closed portion of the housing 20 having a negative polarity are located in the same direction, it is easy to electrically connect the cylindrical batteries 1 using the bus bar 150.

In addition, since the terminal 60 of the cylindrical battery 1 and the outer surface 20a of the closed portion of the housing 20 have a large area, the coupling area of the bus bar 150 may be sufficiently secured to sufficiently reduce the resistance of the battery pack including the cylindrical battery 1.

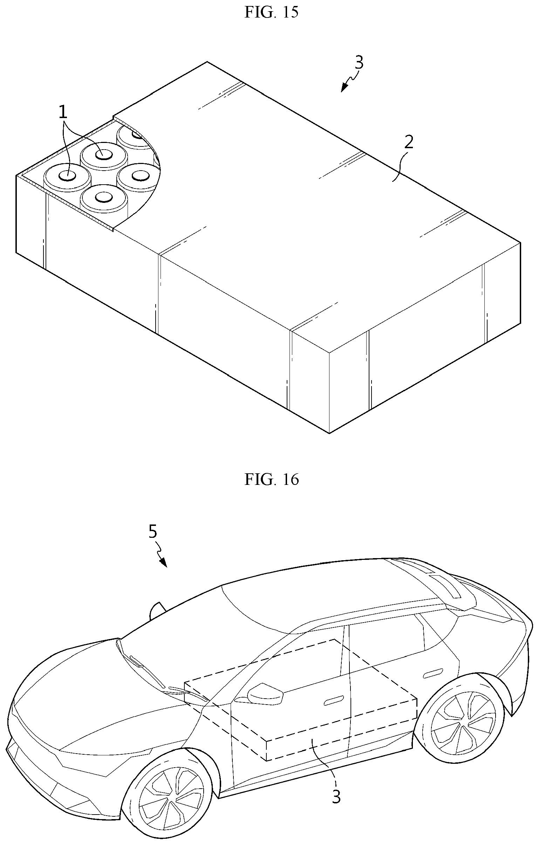

Referring to FIG. 15, a battery pack 3 according to an embodiment of the present disclosure includes a battery aggregate in which a plurality of cylindrical batteries 1 according to an embodiment of the present disclosure are electrically connected, and a pack housing 2 for accommodating the battery aggregate. The electrical connection structure of the plurality of batteries 1 through the bus bar has been exemplarily described with reference to FIG. 14 above, and other components such as a cooling unit and a power terminal are omitted for convenience in drawing.

Referring to FIG. 16, a vehicle 5 according to an embodiment of the present disclosure may be, for example, an electric vehicle, a hybrid vehicle, or a plug-in hybrid vehicle, and includes the battery pack 3 according to an embodiment of the present disclosure. The vehicle 5 includes a 4-wheeled vehicle and a 2-wheeled vehicle. The vehicle 5 operates by receiving power from the battery pack 3 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

5: vehicle
3: battery pack
2: pack housing
1: battery
10: electrode assembly
11: first uncoated portion
12: second uncoated portion
C: winding center hole
20: housing
20a: first electrode terminal
21: beading portion
22: crimping portion
30: first current collector
31: support portion
32: uncoated portion coupling portion
33: housing contact portion
H1: first current collector hole
40: cap
41: venting portion
50: spacer assembly
51: spacer portion
H2: spacer hole
52: gasket portion
53: connection portion
53a: bridge
B: bending portion
N: notch portion
54: ejection preventing portion
60: terminal (second electrode terminal)
G: insulating gasket
70: second current collector
80: insulator

## Claims

1. A battery, comprising:
an electrode assembly having a first uncoated portion and a second uncoated portion;
a housing having an open portion formed at one side and configured to accommodate the electrode assembly through the open portion;
a first current collector coupled with the first uncoated portion and located inside the housing;
a cap configured to cover the open portion; and
a spacer assembly having a spacer portion interposed between the first current collector and the cap and configured to prevent movement of the electrode assembly, a gasket portion interposed between the housing and the cap and configured to seal the gap between the cap and the housing, and a connection portion configured to connect the spacer portion and the gasket portion and having a bending portion configured to switch an extension direction thereof between the spacer portion and the gasket portion.

2. The battery according to claim 1,
wherein the connection portion includes a plurality of bridges arranged to be spaced apart from each other along a circumferential direction of the electrode assembly.

3. The battery according to claim 1,
wherein the bending portion has a convex shape in a direction opposite to the direction toward the first current collector.

4. The battery according to claim 1,
wherein the connection portion has a notch portion configured to partially reduce a cross-sectional area of the connection portion.

5. The battery according to claim 4,
wherein the notch portion is formed to a predetermined depth on a surface facing the first current collector.

6. The battery according to claim 4,
wherein the notch portion is located between the bending portion and the spacer portion.

7. The battery according to claim 1,
wherein the spacer portion has a height corresponding to the distance between the first current collector and the cap.

8. The battery according to claim 1,
wherein the spacer portion is located in the center on one surface of the electrode assembly.

9. The battery according to claim 1,
wherein the spacer portion has a spacer hole formed at a position corresponding to a winding center hole of the electrode assembly.

10. The battery according to claim 9,
wherein the spacer assembly has an ejection preventing portion configured to intersect the spacer hole.

11. The battery according to claim 1,
wherein the housing includes:
a beading portion formed by press-fitting an outer circumference; and
a crimping portion configured to extend and bend so that an end of the crimping portion defining the open portion under the beading portion surrounds an edge of the cap.

12. The battery according to claim 11,
wherein the gasket portion is bent along the crimping portion to surround the edge of the cap.

13. The battery according to claim 2,
wherein the plurality of bridges are configured not to contact the first current collector.

14. The battery according to claim 2,
wherein the plurality of bridges are configured not to contact the cap.

15. The battery according to claim 2,
wherein the first current collector includes:
a support portion located in the center on one surface of the electrode assembly;
an uncoated portion coupling portion configured to extend from the support portion and coupled to the first uncoated portion; and
a housing contact portion configured to extend from the support portion or extend from an end of the uncoated portion coupling portion and interposed between the housing and the gasket portion.

16. The battery according to claim 15,
wherein the housing includes:
a beading portion formed by press-fitting a part of a sidewall of the housing toward the inside; and
a crimping portion configured to extend and bend so that an end of the crimping portion defining the open portion under the beading portion surrounds an edge of the cap,
wherein the housing contact portion is in contact with one surface of the beading portion facing the cap.

17. The battery according to claim 1,
wherein the cap includes a venting portion having a thinner thickness compared to the surrounding region, and
the spacer portion is located more inward than the venting portion not to cover the venting portion.

18. The battery according to claim 1,
wherein the connection portion is located not to overlap with the housing contact portion along a height direction of the battery.

19. A battery pack, comprising the battery according to any one of claims 1 to 18.

20. A vehicle, comprising the battery pack according to claim 19.
